# EUROPÄISCHE PATENTSCHRIFT

(11) **EP 1 046 381 B1**
(45) Veröffentlichungstag und Bekanntmachung des Hinweises auf die Patenterteilung: **14.07.2004**
(21) Anmeldenummer: 00102180.7
(22) Anmeldetag: 09.02.2000
(51) Int. Cl.: A61C 19/00

(54) **Lichthärtgerät**
Light curing apparatus
Appareil de photopolymérisation

(30) Priorität: 26.03.1999 DE 19913890
(43) Veröffentlichungstag der Anmeldung: 25.10.2000
(73) Patentinhaber: Ivoclar Vivadent AG, 9494 Schaan (LI)
(72) Erfinder: Senn, Bruno, 9470 Buchs (CH); Rohner, Gottfried, 9450 Altstätten (CH); Burtscher, Peter, Dr., 6714 Nüziders (AT)
(74) Vertreter: Baronetzky, Klaus, Dipl.-Ing.

(56) Entgegenhaltungen:
- EP-A- 0 948 944
- DE-A- 3 840 984
- US-A- 4 450 139

## Beschreibung

Die Erfindung betrifft ein Lichthärtgerät gemäß dem Oberbegriff von Anspruch 1.

Es sind zahlreiche Lichthärtgeräte bekannt geworden, die mit unterschiedlichen Maßnahmen versuchen, eine möglichst gute Aushärtung zu erzielen und insbesondere die Randspaltbildung zu vermeiden. So ist es aus der druckschriftlichen Veröffentlichung "K.-J. Reinhardt: Der Einfluß der Lichtquelle auf die Randständigkeit von Kompositfüllungen", Carl Hanser Verlag, München, 1991, bekanntgeworden, daß Lichtquellen hoher Lichtintensität zur Randspaltbildung neigen.

Zur Verzögerung des Trommsdorff-Effekts ist ferner vorgeschlagen worden, während der Startzeit der gesamten Belichtungszeit eine verminderte Lichtleistung bereitzustellen, um die Viskosität der Dentalmasse nicht zu schnell ansteigen zu lassen.

Ein weiteres Problem der Dentalmassen ist deren Endhärte. Um hier befriedigende Ergebnisse zu erzielen, ist bereits vorgeschlagen worden, die Lichtleistung über die gesamte Aushärtungsperiode in Stufen ansteigen zu lassen.

Trotz dieser Versuche ist die Schrumpfungskraft bei den bekannten Lichthärtgeräten bislang unbefriedigend.

Ferner sind an sich seit langem Lichthärtgeräte bekannt, bei denen die Lichtleistung über eine Xenon-Blitzlampe bereitgestellt werden soll. Bei derartigen Lichthärtgeräten beträgt die Einschaltdauer jedes Lichtimpulses 0,1 bis 2 Millisekunden, wobei beispielhaft auf die DE-OS 32 15 664 zu verweisen ist.

Versuche mit derartigen Lichthärtgeräten haben jedoch ergeben, daß die Aushärtung unbefriedigend ist, so daß sich derartige Geräte nicht durchgesetzt haben. Außerdem ist die meist recht aufwendig gebaute Xenon-Blitzlampe bereits aufgrund ihrer Größe eher für stationäre Geräte geeignet, wozu auch die vorstehend genannte Veröffentlichung zu verweisen ist.

Daher liegt der Erfindung die Aufgabe zugrunde, ein Lichthärtgerät gemäß dem Oberbegriff von Anspruch 1 zu schaffen, wobei bei der Aushärtung von lichtpolymerisierbaren Dentalmassen die Schrumpfungskraft und die Temperaturbelastung reduziert werden sollen. Durch die geringere Schrumpfungskraft soll bei der Aushärtung von Kompositen die Randbeständigkeit (marginale Adaptation) verbessert werden.

Diese Aufgabe wird erfindungsgemäß durch Anspruch 1 gelöst. Vorteilhafte Weiterbildungen ergeben sich aus den Unteransprüchen.

Erfindungsgemäß ist eine Startzeit mit einem Ansteigen der Lichtleistung vorgesehen, die mit einer Haupthärtungszeit kombiniert ist, bei der die Lichtleistung abwechselnd mit einem hohen und einem niedrigen Leistungswert abgegeben wird. Überraschend führt diese Kombination zu einer verminderten Schrumpfungskraft. Offenbar ergibt sich in den Zeiten niedriger abgegebener Lichtleistung für das Material die Möglichkeit, gegen den Kavitätenrand zu fließen. Es wird eine schonende Aushärtung erzielt und die Neigung zur Randspaltbildung wird durch das erfindungsgemäße Lichthärtgerät vermindert. Dazu beitragen dürfte auch die Tatsache, daß durch den Pulsbetrieb die Temperaturbelastung gegenüber den herkömmichen Lichthärtgeräten deutlich geringer ist.

Während die vorstehend genannten Untersuchungen gemäß der Veröffentlichung von K.J. Reinhardt die Einleitung von Spannungen aufgrund einer hohen Lichtintensität zeigen, ergaben in Verbindung mit der Erfindung vorgenommene Untersuchungen überraschend, daß die erfindungsgemäß kurzzeitig hohe Lichtleistung keineswegs schädlich ist, sondern vielmehr die Festigkeit der gehärteten Dentalmasse günstig beeinflußt.

Ein weiterer günstiger Gesichtspunkt, der sich im Zusammenhang mit der Erfindung ergibt, ist, daß die Dentalmassen während der Härtung gegenüber einer kontinuierlichen Bestrahlung mit hoher Lichtleistung deutlich weniger warm werden. Die Temperaturerhöhung beträgt bei einer Aushärtungszeit von 40 Sekunden lediglich etwa 7°C (bei Aushärtung von 25 mm³ Tetric Ceram, einem lichthärtenden Komposit der Firma Vivadent).

Erfindungsgemäß ferner besonders günstig ist es, wenn mit einer nicht zu langen Periode der Änderung zwischen hohen und niedrigem Leistungswert gearbeitet wird. Die Periode kann beispielsweise 2 Sekunden betragen, wobei sich bei Perioden in diesem Bereich die günstigsten Werte für Endhärte einerseits und die Schrumpfkraft andererseits einstellten.

Gemäß einer vorteilhaften Ausgestaltung der Erfindung ist es vorgesehen, eine Glühlampe als Lichtquelle zu verwenden. Eine Glühlampe hat eine gewisse Trägheit bei der Lichtabgabe, wobei die Verzögerung im Bereich zwischen 100 Millisekunden bis zu knapp einer Sekunde bei größeren Lampen liegt. Andererseits liegt der Innenwiderstand einer kalten Glühwendel erheblich höher als der Innenwiderstand einer heißen Glühwendel, sodaß bei hart getakteten Lichtleistungswechseln, also bei Wechseln zwischen vollständig eingeschalteter und vollständig ausgeschalteter Glühlampe, regelmäßig ein Einschalt-Stromstoß zu verarbeiten wäre, der auch die Glühwendel selbst belastet, so daß sich eine verminderte Lebensdauer einstellen würde.

Um dies zu vermeiden ist es besonders günstig, wenn eine angeschrägte Einschaltflanke für den Übergang zwischen der niedrigen Lichtleistung und der hohen Lichtleistung eingesetzt wird. Erfindungsgemäß besonders günstig läßt sich in diesem Zusammenhang aber die Tatsache ausnutzen, daß die handelsüblichen Halogen-Glühlampen bei beispielsweise um 30 % reduzierter elektrischer Leistung eine um 60 % reduzierte Lichtabgabeleistung aufweisen. Durch die deutlich geringere Temperatur der Glühwendel bei reduzierter Lichtleistung sinkt die Lichtabgabe überproportional. Dieses häufig unerwünschte Verhalten von Glühwendeln läßt sich erfindungsgemäß besonders günstig für die Erholungszeiten der lichtpolymerisierbaren Dentalmassen ausnutzen. Eine Reduktion der elektrischen Leistung um 30 % beispielsweise führt dementsprechend zu einer Reduktion der Lichtleistung um 60 oder 70 %, was für die Bereitstellung der Erholungsperiode ausreichend ist.

Gemäß einem weiteren, besonders günstigen Gesichtspunkt der Erfindung ist es vorgesehen, die Startzeit vergleichsweise eher lang zu wählen, beispielsweise bis zu 40 % der gesamten Belichtungszeit, so daß die Haupthärtungszeit 60 % der gesamten Belichtungszeit beträgt. Hierdurch ergibt sich ein besonders günstiges Vorhärten und eine gleichmäßige Aushärtung, wobei die Durchhärtung sich erfindungsgemäß besonders günstig durch die Kombination der recht langen Startzeit mit der pulsierend realisierten Haupthärtungszeit beeinflussen läßt.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: eine diagrammartige Ansicht eines Leistungsprofils zur Darstellung der abgegebenen Lichtleistung über die Zeit, wobei das erfindungsgemäße Leistungsprofil mit zwei bekannten Leistungsprofilen verglichen wird;
- Fig. 2: ein weiteres Diagramm zur Darstellung der Temperaturerhöhung während der Belichtungszeit; und
- Fig. 3: ein Diagramm zur Darstellung der Schrumpfkraft während der Belichtungszeit.

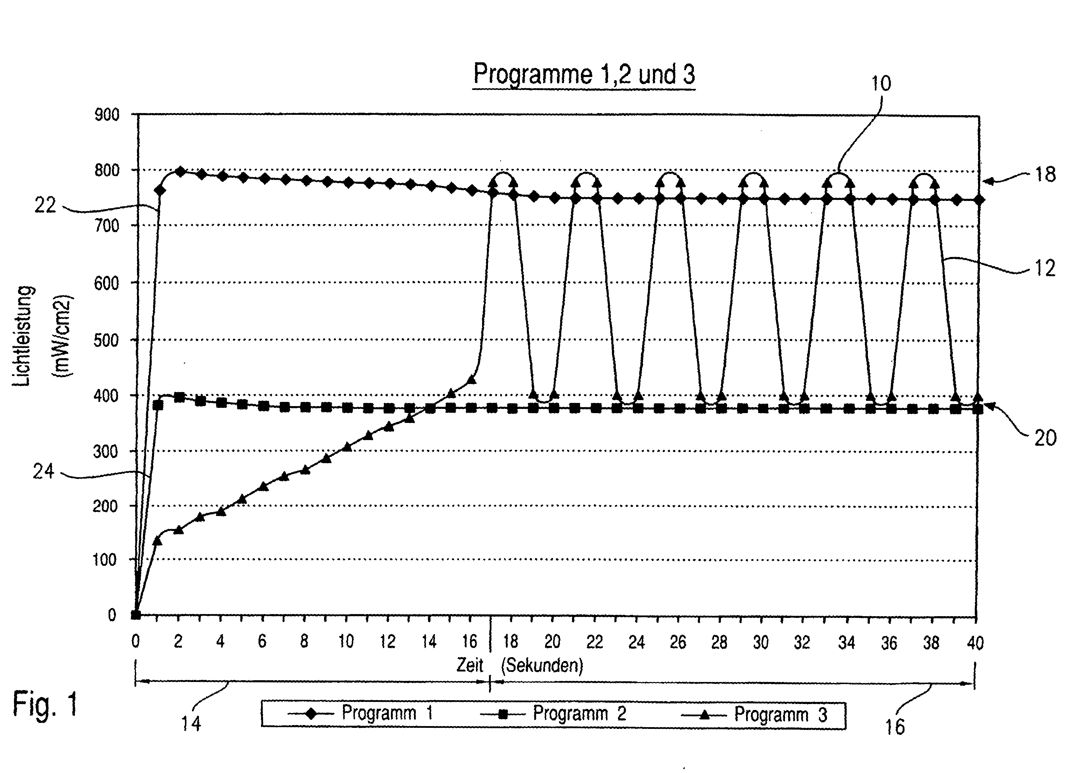

Das in Fig. 1 dargestellte Leistungsprofil 10 zeigt die gemessene Lichtleistung eines Lichthärtgeräts mit 3 Programmen, wobei eine Ausführung des erfindungsgemäßen Lichthärtgeräts das als Programm 3 bezeichnete Leistungsprofil aufweist.

Das Leistungsprofil 10 ist hier als Kurve 12 der Lichtleistung aufgetragen. Hiervon zu unterscheiden ist die eingespeiste elektrische Leistung, die aus Fig. 1 nicht ersichtlich ist. Im bevorzugten Ausführungsbeispiel ergibt die eingespeiste elektrische Leistung die Kurve 12, wobei es bevorzugt ist, diese Kurve über eine Regelung der elektrischen Leistung bereitzustellen.

Erfindungsgemäß besonders günstig ist es, wenn während eines Startbereichs 14 die Lichtleistung kontinuierlich zunimmt und während einer Haupthärtungszeit 16 die Lichtleistung zwischen einem hohen Leistungswert 18 und einem niedrigen Leistungswert 20 pendelt. Die elektrische Leistung ist während der Haupthärtzeit jedoch nicht im wesentlichen sinusförmig wie die abgegebene Lichtleistung, sondern weist zumindest steiler abfallende Flanken auf, während die für die Lichtquelle verwendete Glühlampe langsamer abkühlt als es dem Abfall der eingespeisten Leistung entspricht.

Es versteht sich, daß diese Totzeit erfindungsgemäß in die Regelung der Regelschaltung einbezogen wird.

Das erfindungsgemäße Lichthärtgerät weist neben der erfindungsgemäßen Ansteuerung gemäß der Kurve 12 zwei weitere Leistungsprofile auf, die den Kurven 22 und 24 folgen. Die Kurve 22 zeigt einen steilen Anstieg der Lichtleistung auf den hohen Leistungswert 18, den Maximalwert, dann einen flachen Abfall und ein Halten im wesentlichen über die gesamte Härtungszeit. Demgegenüber zeigt die Kurve 24 einen etwas weniger steilen Anstieg etwa auf den niedrigeren Leistungswert 20. Es ist möglich, mit einem erfindungsgemäßen Lichthärtgerät wahlweise über ein Programm 1 die Kurve 22, über ein Programm 2 die Kurve 24 und über Programm 3 die erfindungsgemäße Kurve 12 anzuwählen. Bei den Programmen 1 und 2 entsprechend den Kurven 22 und 24 erfolgt eine Konstanthaltung der Speisespannung für die Lichtquelle, so daß aufgrund des Innenwiderstands der Lichtquelle ein recht großer Einschaltstrom vorliegt, der entsprechend den ansteigenden Flanken der Kurven 22 und 24 leicht abgeflacht ist.

Erfindungsgemäß demgegenüber wesentlich flacher erfolgt der Anstieg der Kurve 12 mit dem erfindungsgemäßen Leistungsprofil . Während eines Startbereichs, der über immerhin 15 Sekunden von der Gesamtbelichtungszeit von 40 Sekunden dauert, wird zunächst die abgegebene Lichtleistung innerhalb etwa einer Sekunde auf 150 mW/cm² erhöht. Zwischen dem Zeitpunkt einer Sekunde und dem Zeitpunkt 15 Sekunden erfolgt eine gesteuerte Erhöhung der Lichtleistung von 150 mW/cm² auf ungefähr 400 mW/cm², also etwa dem niedrigen Leistungswert.

Hieran schließt sich die Haupthärtungszeit 16 zwischen den Zeitpunkten 15 Sekunden und 40 Sekunden an. Die Lichtleistung wird zunächst zwischen dem Zeitpunkt 15 Sekunden und dem Zeitpunkt 17 Sekunden von ungefähr 400 mW/cm² auf den hohen Leistungswert, nämlich ungefähr 800 mW/cm², erhöht und fällt dann bis zum Zeitpunkt 19 Sekunden auf den niedrigen Leistungswert 20 ab. Die Lichtleistung folgt hier im wesentlichen einer wellenförmigen Kurve, und über die Dauer der Haupthärtungszeit 16 erstreckt sich die Kurve 12 in 6 wellenförmigen Kurven oder 12 Wechseln zwischen hohem und niedrigem Leistungswert 18 und 20. Es versteht sich, daß das genaue Leistungsprofil in weiten Bereichen an die Erfordernisse angepaßt werden kann und insbesondere je nach Härtungsaufgabe programmgesteuert angepaßt wird.

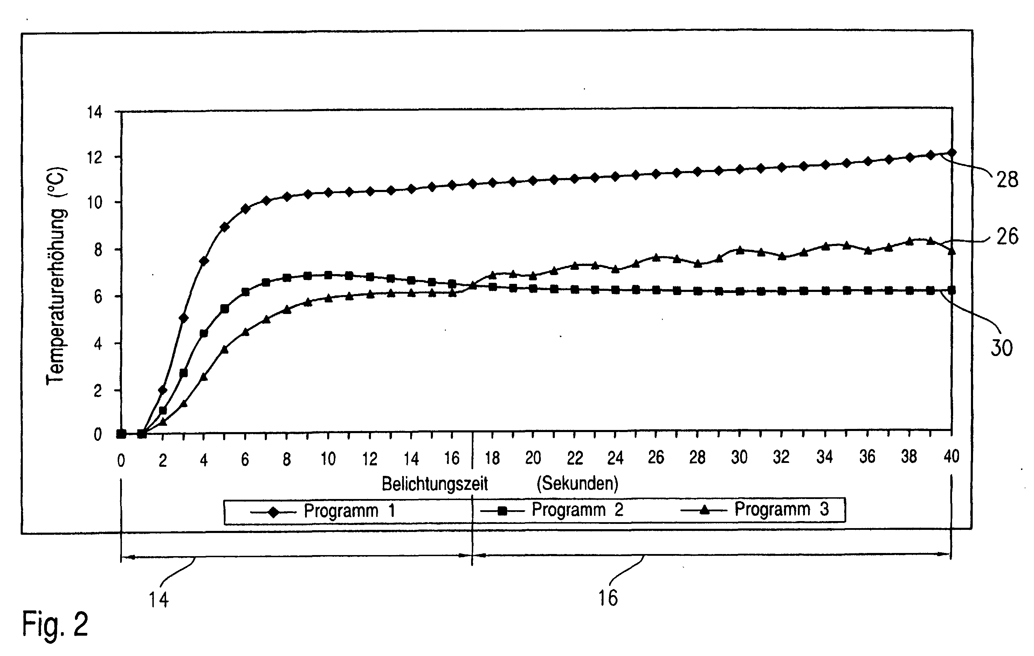

Aus Fig. 2 ist ersichtlich, daß die erfindungsgemäße Ansteuerung des Lichthärtgeräts mit dem Leistungsprofil gemäß Kurve 12 eine deutlich geringere Temperaturerhöhung als bei Programm 1 bedingt. Die Kurven der Programme 1, 2 und 3 sind hier mit den Bezugszeichen 26, 28 und 30 bezeichnet. Das erfindungsgemäße Leistungsprofil 10 ergibt die Wärmekurve 26, also eine Temperaturerhöhung um etwa 7°C (bei Aushärtung von 25 mm³ Tetric Ceram, einem lichthärtenden Komposit der Firma Vivadent) im Endwert, während das Programm 1 eine Temperaturerhöhung um 12 Grad herbeiführt. Es ist ersichtlich, daß die Wärmekurve 26 einen leicht wellenförmig ansteigenden Charakter während der Haupthärtungszeit 16 hat, während die Kurve 30 einen Maximalwert von knapp 7°C bei den Zeitpunkten 9 Sekunden der gesamten Belichtungszeit aufweist und dann etwas abfällt und die Wärmekurve 28 nach etwa 8 Sekunden einen Temperaturerhöhungswert von etwas mehr als 10°C erreicht und dann langsam auf 12°C zunimmt.

Erfindungsgemäß ist damit die material- und patientenbelastende Temperaturerhöhung deutlich geringer als bei der Wärmekurve 28 und etwa im Bereich der Wärmekurve 30.

Ferner wurden bei Untersuchungen, die zusammen mit der Erfindung angestellt wurden, sowohl die Durchhärtungstiefe, als auch die Schrumpfungskraft, bestimmt als die Vickershärte, bestimmt. Bei allen drei Programmen ergaben sich Durchhärtungstiefen um etwa 5 mm, wobei Programm 1 die höchste und Programm 2 die geringste Durchhärtungstiefe hatte, in allen Fällen jedoch die Durchhärtung ausreichend war. Auch die Vickershärte zeigte keine signifikanten Abweichungen zwischen den einzelnen Programmen. Die gemessenen Härten, die bei verschiedenen Proben eine Schwankungsbreite zwischen einem und zwei Prozent zeigten, ergaben folgende Härten gemäß der nachstehenden Tabelle:

| Programm | Vickershärte (HV 0.5/30) (N/mm²) |
|---|---|
| 1 | 584 |
| 2 | 572 |
| 3 | 574 |

Die Vickershärtemessungen zeigen, daß mit allen drei _{P}rogrammen vergleichbare Aushärtungen erhalten werden, wobei sich die Werte statistisch nicht unterscheiden.

Bereits aufgrund der Exemplarstreuungen kann hier keine signifikante Aussage zu Härteunterschiede getroffen werden.

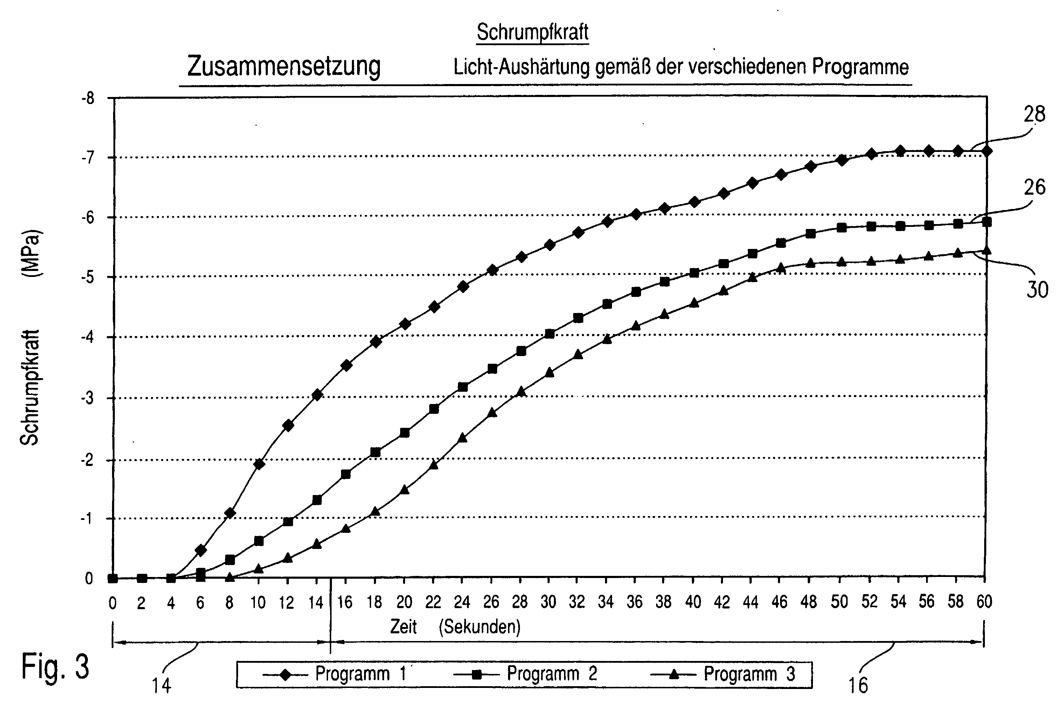

In Fig. 3 ist die Schrumpfkraft der unterschiedlichen Programme dargestellt. Die Schrumpfkraftkurven zeigen deutlich den positiven Effekt von Programm 3. Die langsame Aushärtung mit niedriger Lichtleistung wirkt sich in einem langsamen Anstieg der Schrumpfkraft aus, was sich positiv auf die Randständigkeit einer Füllung auswirken kann.

## Patentansprüche

1. Lichthärtgerät, mit einer Lichtquelle, mit welcher lichtpolymerisierbare Dentalmassen aushärtbar sind, wobei eine Regelschaltung für die gesteuerte Lichtabgabe nach einem vorgegebenen Leistungsprofil vorgesehen ist und das Leistungsprofil eine Startzeit mit einer gegenüber der Maximalleistung verminderten Leistung aufweist, an die sich die Haupthärtungszeit anschließt, **dadurch gekennzeichnet, daß** das Leistungsprofil (10) während der Haupthärtungszeit (16) eine getaktete Leistung zeigt, wobei ein hoher Leistungswert (18) und ein niedriger Leistungswert (20) einander abwechseln.

2. Lichthärtgerät nach Anspruch 1, **dadurch gekennzeichnet, daß** während der Haupthärtungszeit (16) das Lichthärtgerät die Lichtquelle abwechselnd einschaltet und ausschaltet.

3. Lichthärtgerät nach einem der vorhergehenden Ansprüche, **dadurch gekennzeichnet, daß** als Lichtquelle eine Lichtquelle mit einer Glühwendel eingesetzt ist, die abwechselnd hell und weniger hell aufleuchtet.

4. Lichthärtgerät nach einem der vorhergehenden Ansprüche, **dadurch gekennzeichnet, daß** die von der Lichtquelle erzeugte Lichtleistung pulsierend verläuft.

5. Lichthärtgerät nach einem der vorhergehenden Ansprüche, **dadurch gekennzeichnet, daß** die Abfolge des hohen Leistungswerts (18) und des niedrigen Leistungswerts (20) während der Haupthärtungszeit (16) periodisch erfolgt, wobei die Periode zwischen 0,01 und 15 Sekunden und bevorzugt etwa 2 Sekunden beträgt.

6. Lichthärtgerät nach einem der vorhergehenden Ansprüche, **dadurch gekennzeichnet, daß** während des Startbereichs (14) die Lichtleistung zunimmt, insbesondere mit einem zunächst steilen Anstieg und dann mit einem flacheren Anstieg.

7. Lichthärtgerät nach einem der vorhergehenden Ansprüche, **dadurch gekennzeichnet, daß** die Lichtleistung beim Ende des Startbereichs (14) eine Höhe aufweist, die dem niedrigeren Leistungswert (20) entspricht.

8. Lichthärtgerät nach einem der vorhergehenden Ansprüche, **dadurch gekennzeichnet, daß** die Lichtquelle mit ihrer Lichtabgabe in eine Regelung einbezogen ist, die die Lichtleistung nach dem gewünschten Profil konstant regelt.

9. Lichthärtgerät nach Anspruch 8, **dadurch gekennzeichnet, daß** für die Regelung ein PID-Regler eingesetzt ist, der die Totzeit der Lichtquelle berücksichtigt.

10. Lichthärtgerät nach einem der vorhergehenden Ansprüche, **dadurch gekennzeichnet, daß** die Flanken der Leistungserhöhung von dem niedrigen (20) auf den hohen (18) Leistungswert eine Steigung aufweisen, die mehr als 5 %, insbesondere mehr als 10 % der Taktperiode des Leistungsprofils (10) während der Haupthärtungszeit (16) entspricht.

11. Lichthärtgerät nach einem der vorhergehenden Ansprüche, **dadurch gekennzeichnet, daß** die Lichtquelle als Halogenlampe ausgebildet ist und während der Zeit der Leistungsabgabe des niedrigeren Leistungswerts (20) noch leuchtet.

12. Lichthärtgerät nach einem der Ansprüche 1 bis 10, **dadurch gekennzeichnet, daß** die Lichtquelle eine Laserdiode oder eine Anordnung von LEDs ist.

13. Lichthärtgerät nach einem der vorhergehenden Ansprüche, **dadurch gekennzeichnet, daß** die Lichtquelle in einem Handgerät ausgebildet ist, und die Regelschaltung eine Regelstrecke aufweist, die sich insbesondere auch über ein Kabel zwischen dem Handgerät und der Speisestation erstreckt.

## Revendications

1. Appareil de photopolymérisation, avec une source lumineuse avec laquelle des pâtes dentaires photopolymérisables peuvent être durcies, dans lequel il est prévu un circuit de réglage pour l'émission de lumière commandée selon un profil de puissance prédéfini et le profil de puissance présente une durée de démarrage, qui a une puissance réduite par rapport à la puissance maximale et qui est suivie par la durée de durcissement principal, **caractérisé en ce que** le profil de puissance (10) montre pendant la durée de durcissement principal (16) une puissance cadencée dans laquelle une valeur de puissance plus élevée (18) et une valeur de puissance plus basse (20) alternent.

2. Appareil de photopolymérisation selon la revendication 1, **caractérisé en ce que**, pendant la durée de durcissement principal (16), l'appareil de photopolymérisation allume et éteint tour à tour la source lumineuse.

3. Appareil de photopolymérisation selon l'une quelconque des revendications précédentes, **caractérisé en ce que** la source lumineuse employée est une source lumineuse avec un filament boudiné qui émet tour à tour une lumière claire et moins claire.

4. Appareil de photopolymérisation selon l'une quelconque des revendications précédentes, **caractérisé en ce que** la puissance lumineuse générée par la source lumineuse a une allure pulsée.

5. Appareil de photopolymérisation selon l'une quelconque des revendications précédentes, **caractérisé en ce que** la succession de la valeur de puissance élevée (18) et de la valeur de puissance basse (20) se produit de manière périodique pendant la durée de durcissement principal (16), la période étant située entre 0,01 et 15 secondes et étant de préférence de 2 secondes environ.

6. Appareil de photopolymérisation selon l'une quelconque des revendications précédentes, **caractérisé en ce que** la puissance lumineuse augmente au cours de la plage de démarrage (14), en particulier d'abord avec une forte pente ascendante et ensuite avec une pente plus plate.

7. Appareil de photopolymérisation selon l'une quelconque des revendications précédentes, **caractérisé en ce que** la puissance lumineuse présente à la fin de la plage de démarrage (14) un niveau qui correspond à la valeur de puissance plus basse.

8. Appareil de photopolymérisation selon l'une quelconque des revendications précédentes, **caractérisé en ce que** la source lumineuse avec son émission de lumière est intégrée dans un circuit de réglage qui règle de manière constante la puissance lumineuse selon le profil souhaité.

9. Appareil de photopolymérisation selon l'une quelconque des revendications précédentes, **caractérisé en ce qu'**un régulateur PID est impliqué dans la régulation, lequel prend en compte le temps de retard de la source lumineuse.

10. Appareil de photopolymérisation selon l'une quelconque des revendications précédentes, **caractérisé en ce que** les fronts de l'augmentation de puissance présentent, de la valeur de puissance basse (16) à celle élevée (18), une pente qui correspond à plus de 5% de la période de cadencement du profil de puissance (10) pendant la durée de durcissement principal, en particulier plus de 10%.

11. Appareil de photopolymérisation selon l'une quelconque des revendications précédentes, **caractérisé en ce que** la source lumineuse est constituée d'une lampe halogène et qu'elle continue de briller pendant la durée de l'émission lumineuse à la valeur de puissance plus basse (20).

12. Appareil de photopolymérisation selon l'une quelconque des revendications 1 à 10, **caractérisé en ce que** la source lumineuse est une diode laser ou un agencement de diodes électroluminescentes.

13. Appareil de photopolymérisation selon l'une quelconque des revendications précédentes, **caractérisé en ce que** la source lumineuse est intégrée dans un appareil portable et que le circuit de réglage présente un système asservi qui s'étend en particulier également à un câble entre l'appareil portable et le poste d'alimentation.

## Claims

1. A light curing apparatus having a light source with which photopolymerisable dental compounds can be cured, wherein a control circuit is provided for the controlled light emission in accordance with a predetermined output profile and the output profile has a start-up time with a decreased output in relation to the maximum output, which is followed by the principal curing time, **characterised in that** during the principal curing time (16) the output profile (10) exhibits a pulsed output, wherein a high output value (18) and a lower output value (20) alternate with one another.

2. A light curing apparatus according to Claim 1, **characterised in that** during the principal curing time (16) light curing apparatus alternately switches the light source on and off.

3. A light curing apparatus according to any one of the preceding Claims, **characterised in that** a light source having a coiled filament is used, which lights up alternately brightly and less brightly.

4. A light curing apparatus according to any one of the preceding Claims, **characterised in that** the light output generated by the light source proceeds in a pulsating manner.

5. A light curing apparatus according to any one of the preceding Claims, **characterised in that** the sequence of the high output value (18) and of the low output value (20) occurs periodically during the principal curing time (16), wherein the period is between 0.01 and 15 seconds and, preferably, approximately 2 seconds.

6. A light curing apparatus according to any one of the preceding Claims, **characterised in that** during the start-up interval (14) the light output increases, in particular with an initially steep increase and then with a shallower increase.

7. A light curing apparatus according to any one of the preceding Claims, **characterised in that** at the end of the start-up interval (14) the light output has a level which corresponds to the lower output value (20).

8. A light curing apparatus according to any one of the preceding Claims, **characterised in that** the light source with its light emission is integrated into a control which constantly controls the light output in accordance with the desired profile.

9. A light curing apparatus according to Claim 8, **characterised in that** a PID controller is used for the control, which takes in account the time lag of the light source.

10. A light curing apparatus according to any one of the preceding Claims, **characterised in that** the slopes of the increase in output from the low output value (20) to the high output value (18) have a gradient which corresponds to more than 5 %, in particular to more than 10 %, of the clock period of the output profile (10) during the principal curing time (16).

11. A light curing apparatus according to any one of the preceding Claims, **characterised in that** the light source is in the form of a halogen lamp and still illuminates during the period of the power output of the lower output value (20) .

12. A light curing apparatus according to any one of Claims 1 to 10, **characterised in that** the light source is a laser diode or an array of LEDs.

13. A light curing apparatus according to any one of the preceding Claims, **characterised in that** the light source is the form of a hand-operated device and the control circuit has a control system which in particular also extends along a cable between the hand-operated device and the supply station.
